# EUROPEAN PATENT APPLICATION

(11) **EP 2 381 193 A2**
(43) Date of publication of application: **26.10.2011**
(21) Application number: 11158538.6
(22) Date of filing: 16.03.2011
(51) Int. Cl.: F25B 39/04, F25D 23/00, F25B 6/04

(54) **High efficiency condenser**

(30) Priority: 21.04.2010 US 764149
(71) Applicant: Whirlpool Corporation, Benton Harbor, MI 49022 (US)
(72) Inventor: Kuehl, Steven J, Benton Harbor, MI 49022 (US); Wu, Guolian, Benton Harbor, MI 49022 (US); Anselmino, Jeffrey J, St. Joseph, MI 49085 (US)
(74) Representative: Nicholls, Michael John

(57) **Abstract**

A high efficiency condenser (40), in one embodiment, includes a phase change material (60) in thermal contact with the condenser (40) to assist in cooling the condenser during operation and particularly during pull-down operation to improve the cooling capacity of a compressor. In a preferred embodiment of such a system, a coaxial tube carrying the refrigerant through the condenser includes an inner conduit (41) for the refrigerant and a coaxially arranged outer jacket (44) with phase change material (60) for extracting heat from the compressed refrigerant. In another embodiment, a secondary condenser (150) is provided in a secondary coolant circuit and is in thermal contact with the primary condenser (140). Variable speed fans (142,156) are associated with the condenser(s) and can be operated in the high speed (turbo) mode during pull-down of a refrigeration system for providing sufficient cooling capacity during a pull-down mode of operation.

## Description

The present invention relates to a refrigeration system with an improved condenser configuration.

The refrigeration system of the present invention incorporates a high efficiency condenser in which, in one embodiment, a phase change material is incorporated within the condenser to assist in cooling the condenser during operation and particularly during pull-down operation to improve the cooling capacity of a compressor. In a preferred embodiment of such a system, a coaxial tube carrying the refrigerant through the condenser includes an inner conduit for the refrigerant and a coaxially arranged outer jacket with phase change material for extracting heat from the compressed refrigerant. In another embodiment of the present invention, a secondary extended condenser is provided in addition to the condenser having phase change material. In yet another embodiment of the invention, a condenser includes an extended surface and a secondary condenser, both of which include fans which can be operated in the high speed (turbo) mode during pull-down of a refrigeration system for providing sufficient cooling capacity during a pull-down mode of operation. The improved efficiency condenser system of the present system is particularly suited for use with a linear compressor, although it can be employed with conventional rotary compressors as well.
Thus a first aspect of the invention provides a continuous heat rejection condenser for a refrigeration system comprising: a compressor for a refrigerant; a condenser coupled to an output of said compressor; an evaporator coupled to said condenser; and a heat exchanger in thermal communication with said condenser, wherein said heat exchanger includes a phase change material to absorb heat from said condenser. The system may further include a thermally controlled fan for circulating ambient air through said heat exchanger while, or only when, the heat exchanger temperature is above a threshold temperature above ambient temperature. The heat exchanger may include a coaxial conduit with a center conduit for conveying a refrigerant and a surrounding conduit holding said phase change material. The heat exchanger may further include cooling fins in thermal communication with said conduit. The system may further include a secondary condenser coupled in series with said condenser and positioned in a spaced relationship to said condenser. The compressor may be a linear compressor.
A second aspect of the invention provides a refrigerator having a linear compressor and an improved efficiency condenser comprising: a condenser coupled to a linear compressor in a refrigerant circuit; and a heat exchanger in thermal communication with said condenser, wherein said heat exchanger includes a phase change material to absorb heat from said condenser. The condenser may include a first section and a second section in spaced relationship to said first section and in a serial path with said refrigerant circuit. At least one of said first and second sections may include a cooling fan associated therewith. The heat exchanger may include a phase change material associated with said first section of said condenser. Said condenser may include a fan associated with at least one of said first and second sections. Said second section of said condenser may have a larger surface area than said first section, and said fan associated with said second section of said condenser can be a variable speed fan.
A third aspect of the invention provides a refrigerator having a linear compressor and an improved efficiency two section condenser comprising: a condenser including first and second sections in spaced relationship to one another and coupled to a linear compressor in a series refrigerant circuit; a fan associated with at least said second section of said condenser; and wherein said second section of said condenser has a larger surface area than said first section. The fan associated with said second section of said condenser can be a variable speed fan. A heat exchanger may be included in thermal communication with said first section of said condenser, said heat exchanger including a phase change material. The heat exchanger may include a coaxial conduit with a center conduit for conducting a refrigerant and a surrounding conduit holding said phase change material. The refrigerator may further include a fan associated with said first section of said condenser. The refrigerator may further include hollow fins filled with the phase change material, said fins thermally coupling said first and second condenser sections.
In the above aspects the phase change material may include one of a wax and Glauber's salt.

The invention will be further described by way of example with reference to the accompanying drawings, in which:

Fig. 1 is a perspective view of a side-by-side refrigerator freezer incorporating the improved condenser of the present invention;

Fig. 2 is a schematic view of the components of the system of the present invention including a preferred embodiment of a compressor and condenser system;

Fig. 3 is an enlarged schematic view of a linear compressor employed in the preferred embodiment of the invention;

Fig. 4 is an enlarged fragmentary front elevational view of a coaxial condenser employing a phase change material;

Fig. 5 is an enlarged fragmentary cross-sectional view, taken along section lines V-V of Fig. 4;

Fig. 6 is a fragmentary, front elevational view of an alternative condenser structure in which a phase change material is coaxially associated with the refrigerant line in the condenser;

Fig. 7 is a schematic view of the components of an alternative embodiment of a condenser system of the present invention;

Fig. 8 is another alternative embodiment of a condenser system embodying the present invention;

Fig. 9 is another alternative embodiment of a condenser of the present invention;

Figs. 10A-10B are a table illustrating the operational modes of the preferred embodiments of the invention; and

Fig. 11 is a graph comparing typical cycles of operation of systems with and without the condenser system of the present invention.

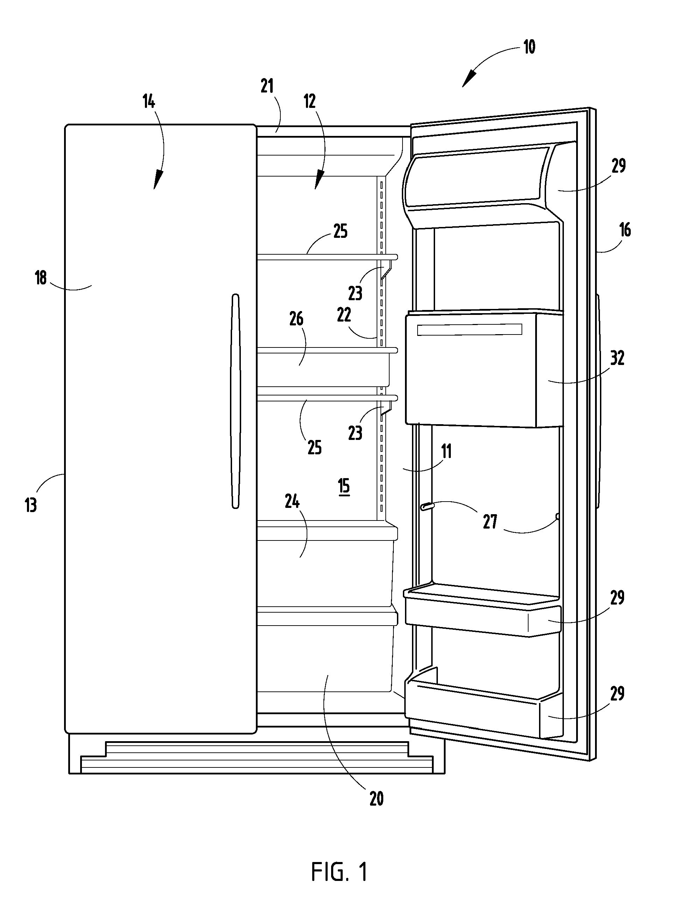

Referring initially to Fig. 1, there is shown a refrigerator freezer 10 embodying the present invention, which includes a side-by-side refrigerated cabinet 12 and a freezer cabinet 14. Each of the cabinets 12 and 14 include side walls 11 and 13, respectively, and a rear wall 15. Refrigerator 10 also includes a closure door 16 for the refrigerator cabinet 12 which is hinged to cabinet 12 and a freezer door 18 hinged to the freezer cabinet 14. Both doors 16 and 18 include suitable seals for providing an airtight thermally insulated sealed connection between the doors and respective cabinets. Although a side-by-side refrigerator/freezer is illustrated in Fig. 1, the present invention can be employed with any configuration of a refrigerator/freezer combination.

Refrigerator 10 is adapted to receive a variety of shelves and modules at different positions defined by, in the embodiment shown in Fig. 1, a plurality of horizontally spaced vertical rails 22 extending from the rear wall of the refrigerator and freezer compartments. In the embodiment shown, the supports are in the form of vertically extending rails with vertically spaced slots for receiving mounting tabs on shelf supports 23 and similar tabs on modules, such as modules 20, 24, 25, and 26, for attaching them in cantilevered fashion to the cabinets at selected incrementally located positions. The inside edges of doors 16 and 18 also include vertically spaced shelf supports, such as 27, for positioning bins 29 and modules, such as 32, in the doors. The shelves, modules, and bins and, thus, be located at a variety of selected locations within the cabinets 12 and 14 and doors 16 and 18 to allow the consumer to select different locations for convenience of use.

Some of the modules in refrigerator 10, such as module 20, may require operating utilities. Thus, module 20 may be a powered crisper or an instant thaw or chill module and may require utilities, such as cooled or heated fluids or electrical operating power. Other modules, such as module 26, may likewise require operational utilities while modules, such as a passive crisper module 20, would not. Door modules also, such as module 32, may, for example, include a water dispenser, vacuum bag sealer or other accessory conveniently accessible either from the outside of door 16 or from within the door and likewise may receive operating utilities from conduits, such as disclosed in Application Serial Nos. 12/469,915, filed May 21, 2009, entitled **REFRIGERATOR MODULE MOUNTING SYSTEM**; 12/469,968 filed May 21, 2009, entitled **MULTIPLE UTILITY RIBBON CABLE**; and 12/493,524 filed June 29, 2009, entitled **TUBULAR** CONDUIT. The disclosures of these patent applications are incorporated herein by reference.

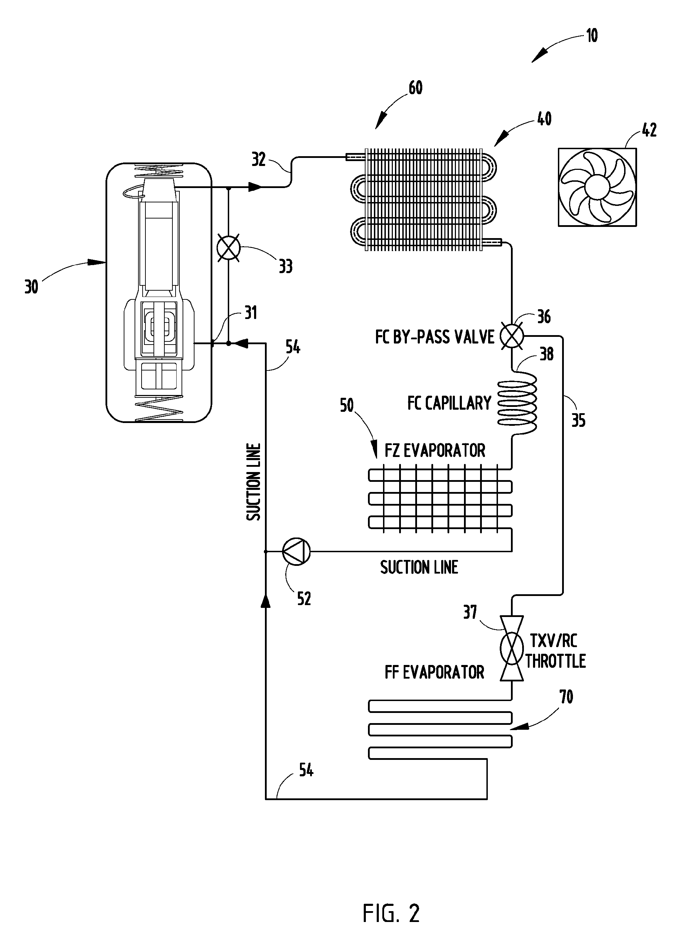

Contained within the insulated cabinets of the refrigerator are the usual freezer and fresh food evaporator, condenser, and the usual fluid couplings to a compressor for the operation of the refrigerator. Refrigerator 10 of this invention, however, includes the improved condenser system of this invention, as shown in the schematic diagram of Fig. 2, now described.

The schematic diagram of Fig. 2 shows the locations of various major components of the refrigerator in no particular relationship within the refrigerator cabinet, it being understood that, in practice, these elements can be located in any conventional or convenient location. For example, the condenser may conventionally be located in the back outside wall of the cabinet or in a compartment above cabinets 12, 14. Thus, the schematic diagram of Fig. 2 is illustrative only and does not necessarily limit the position of any of the components.

In Fig. 2, refrigerator 10 includes a sealed compressor/pump unit 30, which integrally includes a linear compressor 30. Due to its relatively flat elongated shape, compressor 30 can be located conveniently at nearly any location within the refrigerator, including in the space between the refrigerator inner liner and its outer shell. Frequently, a compressor is located near the top of the refrigerator near the condenser where heat can be evacuated upwardly and away from the refrigerator cabinet. The compressor 30 can be of the type described in U.S. Patent Application Serial No. 10/553,944 filed April 22, 2004, entitled **SYSTEM FOR ADJUSTING RESONANT FREQUENCIES IN A LINEAR COMPRESSOR** and published as Publication No. 2006/0110259 on May 25, 2006. The disclosure of this application and publication are incorporated herein by reference.

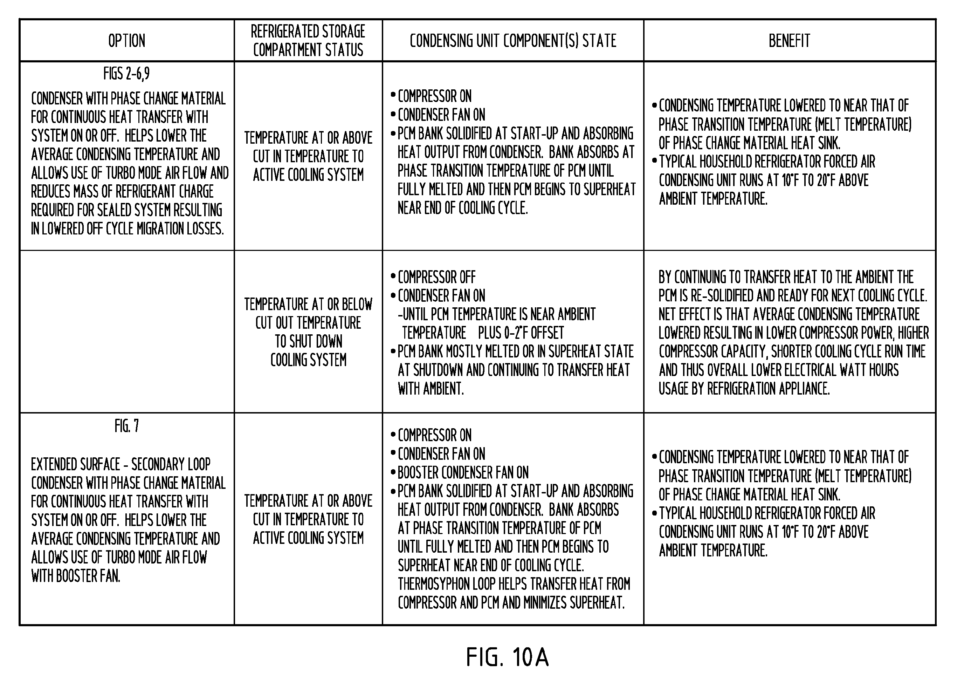

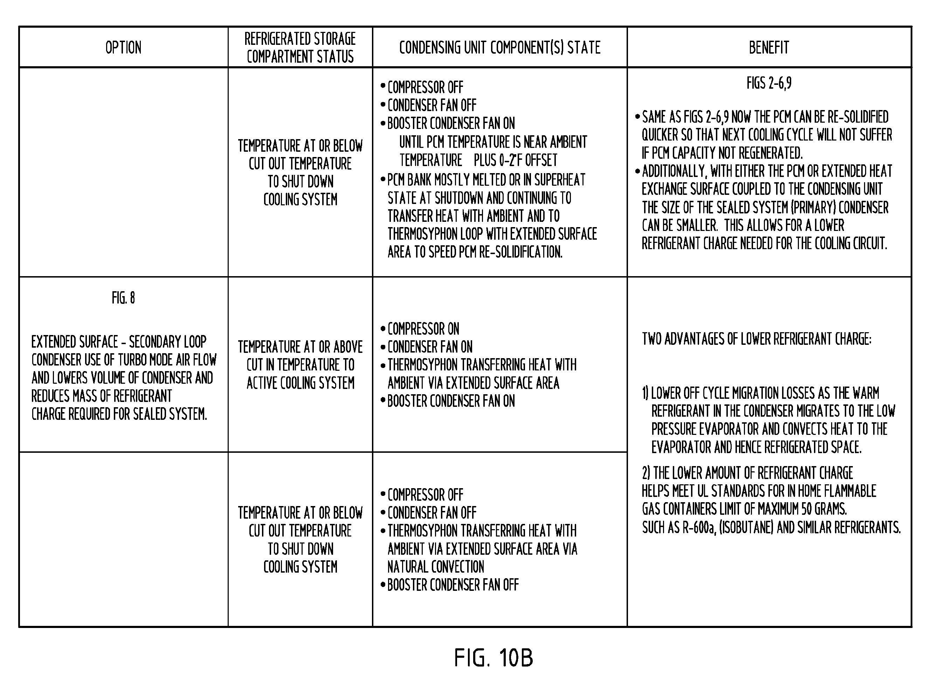

Compressor 30 is coupled to a refrigeration circuit 60 by an outlet/conduit 32 which couples the compressor to a condenser 40 of a first embodiment of the present invention and then to a two-way bypass valve 36. A variable speed fan 42 is positioned adjacent condenser 40 to provide a cooling flow of ambient air across the condenser as described in greater detail below. The bypass valve 36 is selectively operated to either direct the refrigerant flow through a freezer compartment capillary 38 and into the freezer compartment evaporator 50 or via conduit 35 to the fresh food evaporator 70 through a thermostatic expansion valve 37 or other expansion device. When in a position to direct refrigerant to the freezer evaporator 50, a check valve 52 is open to the suction line 54 leading to the input 31 of the compressor. With the valve 36 in the freezer compartment bypass position, the refrigerant flows through conduit 35 into a thermostatic expansion valve 37, into the fresh food evaporator 70, and then into the suction line 54 again leading to the input 31 of compressor 30. Bypass valve 36 is selectively operated by a microprocessor-based control circuit to either allow the flow of refrigerant through the freezer evaporator 50 or, alternatively, through the fresh food evaporator 70 depending upon the thermal demand of the compartments 14, 12, respectively. Though not illustrated thusly, suction line 54 typically is in thermal communication with freezer capillary 38 or fresh food expansion device 37 for operational efficiency. The compressor 30 may include a hot gas bypass proportional valve 33 coupled between the input 31 and output 32 of compressor 30 to modulate the capacity of the compressor 40 as desired during different operational conditions. The refrigeration system described, thus, includes a microprocessor-based control circuit with suitable temperature sensors which can be of a generally conventional design and operated in modes shown in the table of Fig. 10.

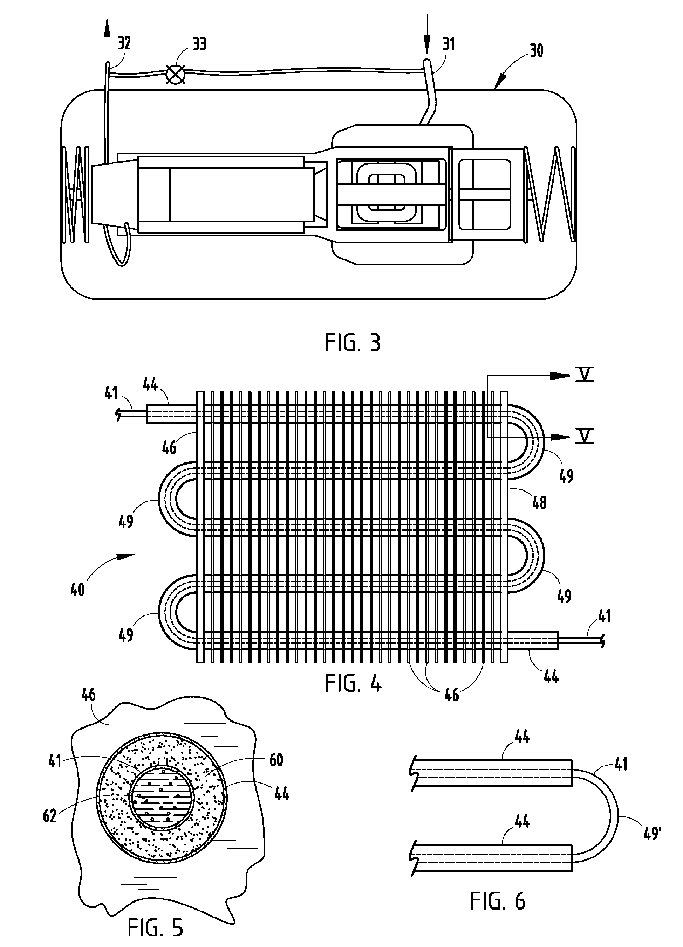

The refrigerator 10 includes a linear compressor 30, in the preferred embodiment of the invention, which provides superior energy performance under normal operating conditions and excels in partial load conditions and has the characteristic of being more favorably responsive to condensing pressure, specifically, the lower condensing pressure results in an amplified increase in pumping capacity relative to power draw in comparison with similar nominal capacity reciprocating compressors. At increased condensing temperatures, its operation is not optimized, and it is desirable to reduce the condenser temperature during, for example, pull-down operations in which the refrigerator is loaded with new provisions by the consumer, thus, requiring increased cooling capacity. According to one embodiment of the invention shown in Figs. 2, 4, and 5, the improved condenser 40 configuration shown in detail in Figs. 4 and 5 is employed. In Fig. 4, the condenser 40 comprises a coaxial arrangement of an inner refrigerant tube 41 coaxially surrounded by a larger diameter tube 44, between which there is inserted a phase change material 60 (Fig. 5), such as paraffin wax having a specific heat capacity of from about 2.14-2.9 joules per gram per degree Kelvin and a heat fusion of 200-220 joules per gram. The solid phase change material melts at from about 85°F to about 100°F during the operation of compressor 30 transferring heat from the heated refrigerant in conduit 41 and, therefore, provides cooling to the condenser 40 and refrigerant therein with heat being continuously rejected to the ambient air via the cooling fins 46 of the condenser 40. Once the compressor turns off, it continues to release the stored heat through the cooling fins 46 of the condenser 40 under the influence of cooling air from fan 42 (Fig. 2). Alternatively, the phase change material can be Glauber's salt (historically Sal Mirabilis), which has similar melting temperatures in the about 85°F to about 100°F range, or equivalent phase transition material, such as a variety of hydrated salts, a specific example being *Thermal Salt Latest*™ *29T.*

The outer tube 44 concentrically surrounds refrigerant tube 41 in which a refrigerant 62 flows in typically a heated gas and subsequently liquid form as it exits the condenser. The coaxial tubes 41 and 44 are supported by supports 46 and 48 at opposite ends and a plurality of parallel spaced conventional fins 46, typically made of aluminum, are affixed to the outer diameter of tube 44 in a conventional manner to be in thermal communication with the tubes. In view of the possible practical difficulty in providing curved ends, such as 49 (Fig. 4), to the coaxial arrangement of tubes 41 and 44, the condenser 40 can be modified as illustrated in Fig. 6 to utilize straight sections 44 of sealed coaxial tubes surrounding refrigerant tube 41 within the body of condenser 40. The inner refrigerant tubes 41 are curved at 49' as seen in Fig. 6, without the supplemental coaxial tubing 44 surrounding the curved sections extending from the ends of supports 46 and 48. In either configuration, a sufficient number of sections 44 of coaxial conduits 41 and 44 are provided in the condenser to provide efficient cooling of the refrigerant prior to exiting the condenser. The use of a phase change material allows the continuous transfer of heat to the ambient during both compressor on and off operation, while the use of variable speed fan 42 assists in the transfer of heat from condenser and phase change material. This allows a reduced mass of refrigerant charge in the system, resulting in lowered off-cycle refrigerant migration losses.

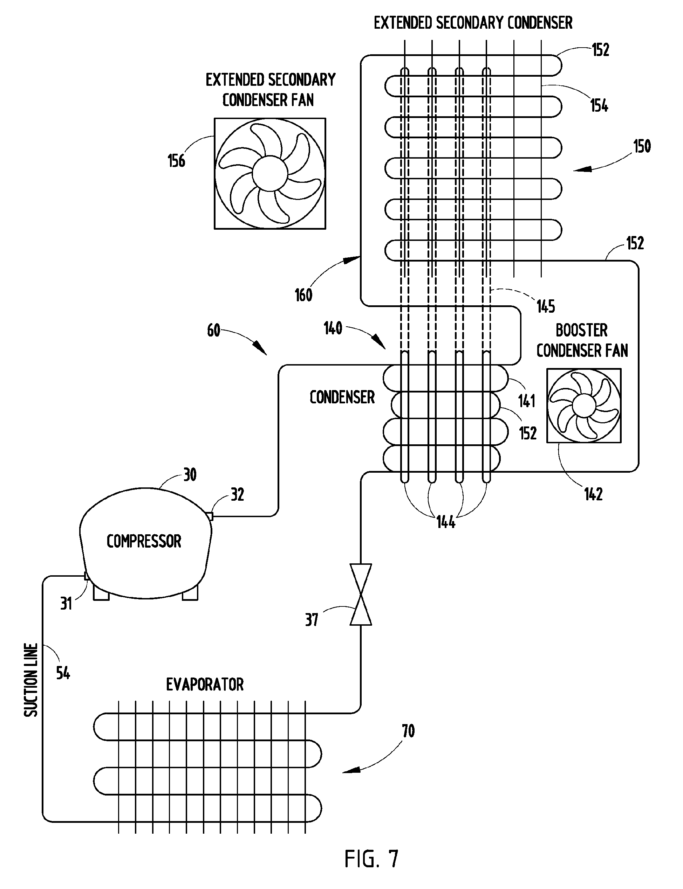

An alternative embodiment of the invention is shown in Fig. 7, in which a refrigeration circuit 60 is shown, including (for illustrative purposes only) a single evaporator, such as evaporator 70, coupled to the suction line 54 of compressor 30 having an input 31 and output 32 leading to condenser 140. Condenser 140 includes phase change material, such as sealed fin-like containers 144 (similar to radiation elements) in thermal communication with refrigerant-containing conduits 141. The phase change material is the same as in the first embodiment and is in close thermal communication with the conduits 141, so as to change phase from solid to liquid during an on cycle of compressor 30 and subsequently change back to the solid form during an off phase of operation. A variable speed condensing fan 142 is associated with condenser 140 for assisting in the transfer of heat from the condenser. A secondary coolant circuit 160 includes a condenser 150 of conventional construction including a coolant conduit 152 which extends through cooling fins 154, which are cooled by a secondary condensing fan 156. The coolant line or conduit 152 is filled with a suitable heat transfer media, such as a water/alcohol mixture or refrigerant so a thermosyphon heat transfer system is established with flow driven by density gradients or a heat pipe arrangement with flow driven by surface tension effects. Conduit 152 extends into condenser 140 and is in thermal communication with phase change elements 144, as well as refrigerant conduit 141, to transfer heat from condenser 140 to secondary condenser 150 by convection flow. This construction allows condenser 140 to be somewhat smaller than condenser 40, if desired, and, with the secondary condenser 150 and pair of fans 142 and 156, which can be operated either at a relatively low continuous speed or at a high (turbo mode) speed for efficiency, provides sufficient cooling of the refrigerant under abnormally high load conditions to allow the compressor 30 to efficiently operate. The secondary cooling circuit 160 serves as a thermal siphon to extract heat from the primary condenser 140. As shown in phantom lines in Fig. 7, the phase change material 144 in fin-like containers 145 can be extended to bridge both refrigerant condenser 140 and secondary coolant condenser 150.

In either system, a condenser employing a phase change material is essentially expelling heat 100% of the time to reduce the average condensing temperature and increase the energy efficiency of the refrigeration system. The heat rejection of the condenser improves during compressor run time when the refrigerant discharged from the compressor rejects heat to the phase change material which, in turn, transfers heat to the ambient air with the assistance of the variable speed fans. The concentric tube arrangement is one example of how such a condenser with phase change material can be constructed. The phase change material rejects heat to the ambient air through natural convection or forced convection through the use of variable speed fans and efficiently transfers heat away from the refrigerant via a conduction pathway into the thermal absorber that undergoes a phase transition which, in turn, provides substantial thermal capacity at or near constant temperature leading to a refrigeration system with increased capacity resulting in shorter cooling cycles, faster pull down rates, and lower overall energy consumption.

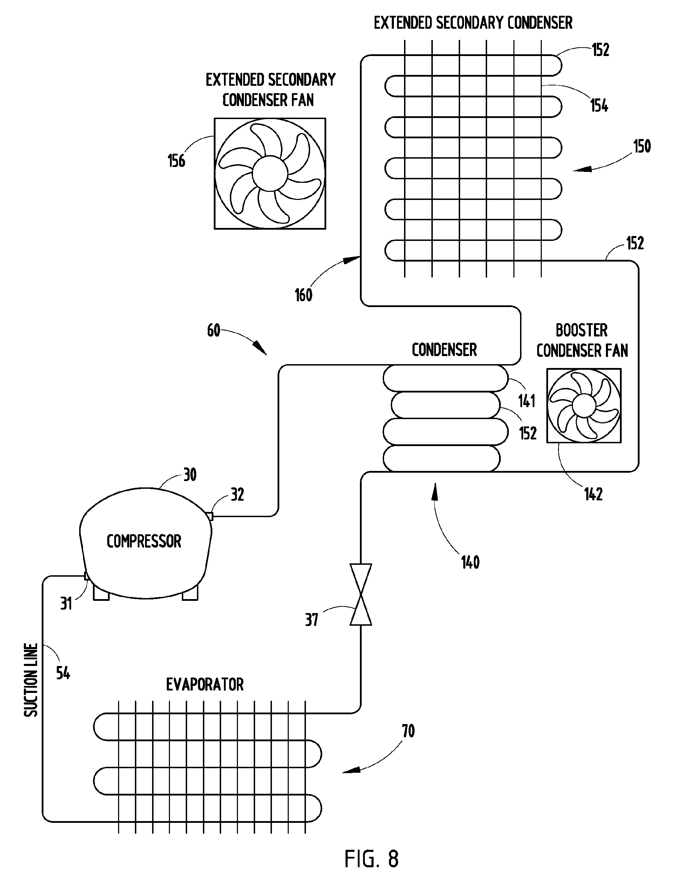

In some embodiments where two condenser circuits, such as shown in Fig. 8, are employed, a phase change material may not be necessary. As shown in Fig. 8, the system is substantially the same as shown in Fig. 7 without the use of a phase change material 144. The refrigerant circuit 60 employs a first condenser 140, while a second coolant circuit 160 includes a secondary condenser 150, both of which are in thermal communication with adjacently positioned fans 142 and 156, respectively. Although the system of Fig. 8 does not have the benefit of phase change material, by operating fans 142 and 156 in a high speed mode of operation while compressor 30 is running, the utilization of spaced-apart condensers will result in improved performance of compressor 30 by the efficient operation of both of the fans 142 and 156 in the removal of heat from the refrigerant flowing through the condenser 140 and the coolant in conduit 152 flowing through condenser 150. During the compressor-off mode of operation, fan speeds are reduced or one or both of the fans turned off, thereby also improving the efficiency of the operation of the system. This type of condenser arrangement has a prime benefit of a smaller condenser volume and, thus, a lower amount of refrigerant charge. This can be advantageous for minimizing off-cycle warm liquid refrigerant migration from the condenser into a cold evaporator, thus, incurring heat gain and secondly in reducing the operationally optimal amount of flammable refrigerants, such as R-600a (Isobutane), in household refrigerators, where the mass of refrigerant allowed is regulated by safety standards, such as UL, in the United States of America.

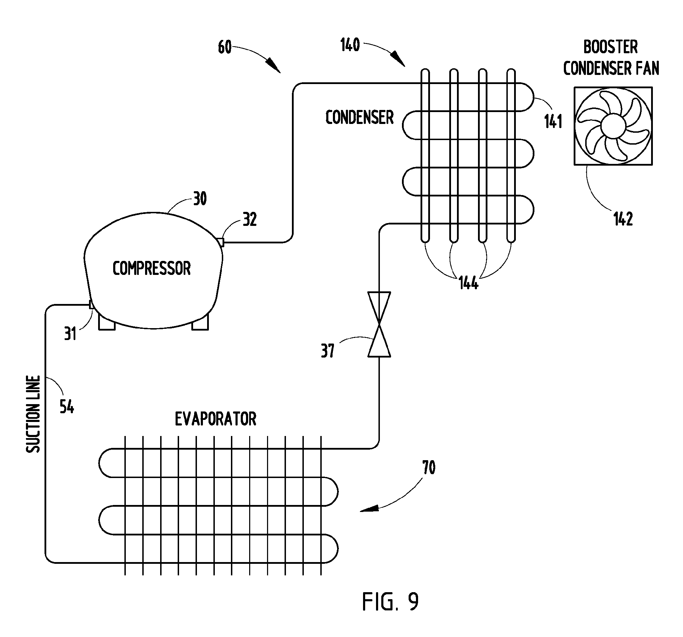

Fig. 9 shows yet another embodiment of the invention in which a single condenser 140 of the same general construction as shown by condenser 140 in Fig. 7 is employed but without the use of a secondary condenser. In this embodiment, phase change material is positioned again in fin-like holders 144 surrounded by and in thermal communication with the refrigerant conduit 141 of condenser 140. Again, a variable speed fan 142 is employed for cooling the condenser and the phase change material holders during high demand conditions where the compressor 30 is running and the condenser is being heated by the refrigerant. The same numerals employed with the same reference numerals and their operation are identical with that shown in Fig. 7, however, fan 142 plays a somewhat more important role in providing an airflow through condenser 140 to maintain the condenser temperature relatively low during operation, thus, improving the efficiency of the compressor 30 and in resolidifying the phase change material during compressor off mode.

Fig. 10 is a table showing the various modes of operation of the systems, including the on/off state of the compressor and fans during cycles of operation. The control circuit for the system will include a microprocessor programmed according to the refrigerator set temperatures as noted in the table of Figs. 10A-10B and is programmed in a conventional manner to control the operation of the system as indicated by the table of Figs. 10A-10B.

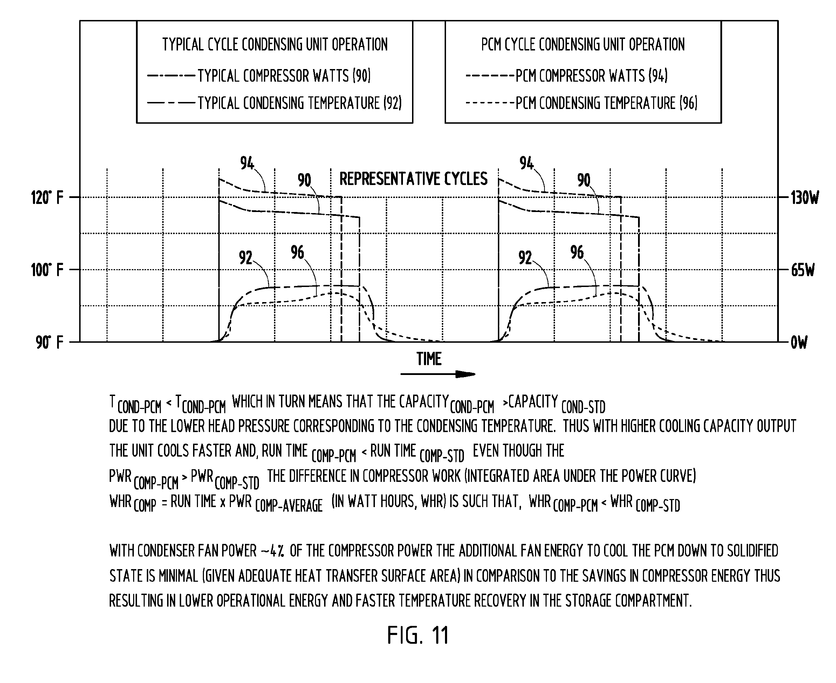

Fig. 11 is a graph representing cycles of operation of a conventional condensing unit as compared to the improved high efficiency condensing unit of the present invention. Curves 90 and 92 illustrate the power, temperature, and on-time of a typical compressor employed with a normal condensing system. In contrast, the phase change media (PCM) linear compressor 30 operation is represented by graphs 94 and 96, which indicates the compressor power, temperature activation, on-time and temperature cycling. The power is slightly higher, but it operates for a shorter period of time than a system with a conventional condenser. Graph 96 represents the high efficiency condenser 40 operation, which, as can be seen, lowers the temperature significantly as compared to the graph 92 of a conventional condensing unit. This allows the compressor 30 to run a shorter period of time while providing a higher cooling capacity and, thus, faster temperature recovery for the refrigerated storage compartment during pull-down and normal cycling modes.

Thus, with the improved efficiency condenser systems of the present invention, a refrigeration system can operate to reach a given set point in a relatively shorter time frame to provide superior food preservation performance. Although the preferred embodiments disclosed employ a linear compressor, the condenser system can be employed to improve the efficiency of operation of a refrigeration system utilizing a conventional reciprocating compressor. It will become apparent to those skilled in the art that various modifications to the preferred embodiments of the invention as described herein can be made without departing from the scope of the invention as defined by the appended claims.

## Claims

1. A continuous heat rejection condenser for a refrigeration system comprising:
a compressor for a refrigerant;
a condenser coupled to an output of said compressor;
an evaporator coupled to said condenser; and
a heat exchanger in thermal communication with said condenser, wherein said heat exchanger includes a phase change material to absorb heat from said condenser.

2. The system as defined in claim 1 and further including a thermally controlled fan for circulating ambient air through said heat exchanger while, or only when, the heat exchanger temperature is above a threshold temperature above ambient temperature.

3. The system as defined in claim 1 or 2 wherein said heat exchanger includes a coaxial conduit with a center conduit for conveying a refrigerant and a surrounding conduit holding said phase change material and wherein said heat exchanger further includes cooling fins in thermal communication with said conduit.

4. The system as defined in claim 1, 2 or 3 wherein said system includes a secondary condenser coupled in series with said condenser and positioned in a spaced relationship to said condenser.

5. The system as defined in claim 1, 2, 3 or 4 wherein said compressor is a linear compressor.

6. A refrigerator having a linear compressor and an improved efficiency condenser comprising:
a condenser coupled to a linear compressor in a refrigerant circuit; and
a heat exchanger in thermal communication with said condenser, wherein said heat exchanger includes a phase change material to absorb heat from said condenser.

7. The refrigerator as defined in claim 6 wherein said condenser includes a first section and a second section, preferably having a larger surface area than said first section, in spaced relationship to said first section and in a serial path with said refrigerant circuit.

8. The refrigerator as defined in claim 7 wherein at least one of said first and second sections includes a fan associated therewith, more preferably a variable speed fan associated with said second section..

9. The refrigerator as defined in claim 7 or 8 wherein said heat exchanger including said phase change material is associated with said first section of said condenser.

10. A refrigerator having a linear compressor and an improved efficiency two section condenser comprising:
a condenser including first and second sections in spaced relationship to one another and coupled to a linear compressor in a series refrigerant circuit;
a fan associated with at least said second section of said condenser; and
wherein said second section of said condenser has a larger surface area than said first section.

11. The refrigerator as defined in claim 10 and further including a heat exchanger in thermal communication with said first section of said condenser, said heat exchanger including a phase change material.

12. The system of claim 1 or the refrigerator as defined in claim 10 or 11 wherein said heat exchanger includes a coaxial conduit with a center conduit for conducting a refrigerant and a surrounding conduit holding said phase change material.

13. The refrigerator as defined in claim 12 and further including a fan associated with said first section of said condenser.

14. The refrigerator as defined in claim 10 or any claim dependent therefrom and further including hollow fins filled with the phase change material, said fins thermally coupling said first and second condenser sections.

15. The system of any one of claims 1 to 5 or the refrigerator of any one of claims 6 to 9, 11, 12 or 13, wherein said phase change material includes one of a wax and Glauber's salt.
